# EUROPÄISCHE PATENTANMELDUNG

(11) **EP 4 807 230 A1**
(43) Veröffentlichungstag der Anmeldung: **16.09.2026**
(21) Anmeldenummer: 25163604.9
(22) Anmeldetag: 13.03.2025
(51) Int. Cl.: F16L 3/22, F16B 7/04, F16L 3/13

(54) **HALTER FÜR EIN FLUIDLEITUNGSELEMENT UND MODULARES HALTERSYSTEM FÜR FLUIDLEITUNGSELEMENTE**

(71) Anmelder: Kverneland Group Soest GmbH, 59494 Soest (DE)
(72) Erfinder: Schmidt, Marcel, 59494 Soest (DE); Diepenbrock, Felix, 59494 Soest (DE)
(74) Vertreter: Bittner, Thomas L.

(57) **Zusammenfassung**

Die Erfindung betrifft einen Halter (1) für ein modulares Haltersystem sowie ein modulares Haltersystem. Für einen Halterkörper (2) des Halters (1) ist Folgendes vorgesehen: eine Aufnahmeöffnung (4) mit einer Durchgangsrichtung (7) zum Aufnehmen eines Fluidleitungselements (30) wie Rohr oder Schlauch; erste Außenseiten auf entlang einer ersten Richtung quer zur Durchgangsrichtung (7) ersten gegenüberliegenden Seiten des Halterkörpers (2); zweite Außenseiten auf entlang einer zweiten Richtung quer zur Durchgangsrichtung und quer zur ersten Richtung zweiten gegenüberliegenden Seiten des Halterkörpers (2); und eine Verbindungseinrichtung (8), die eingerichtet ist, den Halterkörper (2) mit einem weiteren Halter zu verbinden, welcher in einem weiteren Halterkörper eine weitere Aufnahmeöffnung mit der Durchgangsrichtung (7) zum Aufnehmen eines weiteren Fluidleitungselements aufweist, und hierbei mit einer zugeordneten Verbindungseirichtung an dem weiteren Halterkörper (2) zusammenzuwirken. Die Verbindungseinrichtung (8) auf den ersten gegenüberliegenden Seiten und mindestens einer der zweiten gegenüberliegenden Seiten ist jeweils derart ausgebildet, dass der Halterkörper (2) auf den ersten Außenseiten und mindestens einer der zweiten Außenseiten jeweils einseitig mit dem weiteren Halter unter Ausbildung einer lösbaren sowie kraft- und / oder formschlüssigen Verbindung zwischen der Verbindungseinrichtung (8) und der zugeordneten Verbindungseinrichtung verbindbar ist.

## Beschreibung

Die Erfindung betrifft einen Halter für ein Fluidleitungselement wie Rohr oder Schlauch sowie ein modulares Haltersystem für Fluidleitungselemente.

### Hintergrund

Fluidleitungselemente dienen dazu, in unterschiedlichsten Anwendungen ein Fluid zu leiten, also ein gasförmiges oder ein flüssiges Medium. Fluidleitungselemente sind insbesondere in Form von Rohren oder Schläuchen bekannt. Hierbei ist es häufig notwendig, ein oder mehrere Fluidleitungselemente zu halten, zum Beispiel zum lokalen Fixieren des Fluidleitungselements. Hierfür sind Halter bekannt, die in einem Halterkörper eine Aufnahmeöffnung aufweisen, in welcher das zu haltende Fluidleitungselement eingebracht und gehalten werden kann. Es kann vorgesehen sein, den Halter für das Fluidleitungselement dann seinerseits auf einer Montagefläche zu montieren und so zu fixieren. Um in Anwendungssituationen die Möglichkeit zum haltenden Aufnehmen von mehr als einem Fluidleitungselements bereitzustellen, besteht Bedarf für einen Halter für ein modulares Haltesystem.

Dokument WO 2006 / 128526 A1 offenbart einen Halter für Schläuche oder Rohre mit einem Unterteil und einem darauf aufgesetzten Oberteil, wobei sowohl Unterteil als auch Oberteil jeweils eine kreisförmige Nut aufweisen, die sich zu einem Schlauch oder ein Rohr aufnehmenden Aufnahmeöffnung ergänzen, wobei Oberteil und Unterteil ineinandergreifende Elemente aufweisen und wobei Bohrungen ausgebildet sind, um zumindest das Unterteil an einer Montagestelle zu montieren. Oberteil und Unterteil sind durch im Wesentlichen identische Teile gebildet. Im Bereich der Verbindungsfläche von Oberteil und Unterteil sind jeweils mindestens ein Vorsprung und jeweils mindestens eine Vertiefung ausgebildet, die die ineinandergreifenden Elemente bilden, wobei der Vorsprung bzw. die Vertiefung auf der einen Seite zu einer senkrechten Mitteleben, die senkrecht zu der Verbindungsfläche verläuft, eine korrespondierende Vertiefung bzw. einem korrespondierenden Vorsprung auf der anderen Seite der Mittelebene entspricht.

Im Dokument WO 2009 / 122 119 A1 ist ein Halter für einen Schlauch oder ein Rohr offenbart, bei dem ein seitlicher Durchbruch am Halterkörper mit Hilfe eines schwenkbar am Halterkörper angeordneten Seitenwandabschnitts verschließbar ist. Der Halter weist auf gegenüberliegenden Seitenflächen eine Verbindungseinrichtung auf, die eingerichtet ist, eine lösbare Verbindung zu einem benachbarten Halter auszubilden.

### Zusammenfassung

Aufgabe der Erfindung ist es, einen Halter für ein modulares Haltersystem sowie ein modulares Haltersystem für Fluidleitungselemente wie Rohre oder Schläuche anzugeben, die es ermöglichen, ein oder mehrere Fluidleitungselemente sicher zu halten, insbesondere auch dann, wenn der Halter oder das modulare Haltersystem Schwingungen oder Erschütterungen ausgesetzt sind.

Zur Lösung ist ein Halter für ein modulares Haltersystem nach dem unabhängigen Anspruch 1 geschaffen. Weiterhin ist ein modulares Haltersystem für Fluidleitungselemente wie Rohre oder Schläuche nach dem nebengeordneten Anspruch 10 geschaffen. Ausgestaltungen sind Gegenstand von abhängigen Unteransprüchen.

Nach einem Aspekt ist ein Halter für ein modulares Haltersystem zum haltenden Aufnehmen eines Fluidleitungselements wie Rohr oder Schlauch geschaffen. Der Halter umfasst einen Halterkörper, welches Folgendes aufweist: eine erste Aufnahmeöffnung mit einer Durchgangsrichtung zum Aufnehmen eines Fluidleitungselements wie Rohr oder Schlauch; erste Außenseiten auf entlang einer ersten Richtung quer zur Durchgangsrichtung ersten gegenüberliegenden Seiten des Halterkörpers; zweite Außenseiten auf entlang einer zweiten Richtung quer zur Durchgangsrichtung und quer zur ersten Richtung zweiten gegenüberliegenden Seiten des Halterkörpers; und eine Verbindungseinrichtung, die eingerichtet ist, den Halterkörper mit einem weiteren Halter zu verbinden, welcher in einem weiteren Halterkörper eine weitere Aufnahmeöffnung mit der Durchgangsrichtung zum Aufnehmen eines weiteren Fluidleitungselements aufweist, und hierbei mit einer zugeordneten Verbindungseirichtung an dem weiteren Halterkörper zusammenzuwirken. Die Verbindungseinrichtung ist auf den ersten gegenüberliegenden Seiten und mindestens einer der zweiten gegenüberliegenden Seiten jeweils ausgebildet, derart, dass der Halterkörper auf den ersten Außenseiten und mindestens einer der zweiten Außenseiten jeweils einseitig mit dem weiteren Halter unter Ausbildung einer lösbaren sowie kraft- und / oder formschlüssigen Verbindung zwischen der Verbindungseinrichtung und der zugeordneten Verbindungseinrichtung verbindbar ist.

Nach einem weiteren Aspekt ist ein modulares Haltersystem für Fluidleitungselemente wie Rohre oder Schläuche, mit mehreren Halter der vorgenannten Art geschaffen, wobei ein erster Halterkörper eines ersten Halters und ein zweiter Halterkörper eines zweiten Halters jeweils Folgendes aufweisen: eine Aufnahmeöffnung mit einer Durchgangsrichtung zum Aufnehmen eines Fluidleitungselements aufweist; erste Außenseiten auf entlang einer ersten Richtung quer zur Durchgangsrichtung ersten gegenüberliegenden Seiten des Halterkörpers; zweite Außenseiten auf entlang einer zweiten Richtung quer zur Durchgangsrichtung und quer zur ersten Richtung zweiten gegenüberliegenden Seiten des Halterkörpers; und eine Verbindungseinrichtung, mit der eine lösbare sowie kraft- und / oder formschlüssige Verbindung ausbildbar ist. Bei dem ersten und dem zweiten Halterkörper ist die Verbindungseinrichtung jeweils auf den ersten gegenüberliegenden Seiten und mindestens einer der zweiten gegenüberliegenden Seiten ausgebildet. Zwischen der Verbindungseinrichtung des ersten Halters und der zugeordneten Verbindungseinrichtung des zweiten Halters ist die lösbare sowie kraft- und / oder formschlüssige Verbindung gebildet.

Der geschaffene Halter für das Fluidleitungselement wie Rohr oder Schlauch ist eingerichtet für ein modulares Haltersystem, in welchem mehrere der Halter mit Hilfe der an den Haltern jeweils gebildeten Verbindungseinrichtung lösbar sowie kraft- und / oder formschlüssig miteinander verbunden werden können, derart, dass die Halter jeweils mindestens ein Fluidleitungselement zum Halten aufnehmen können.

Die Verbindungseinrichtung des Halters ist auf wenigstens drei Außenseiten des Halterkörpers jeweils ausgebildet, derart, dass auf den so hergerichteten Außenseiten jeweils ein weiterer Halterkörper eines weiteren Halters montierbar ist. Hierbei wird die lösbare sowie kraft- und / oder formschlüssige Verbindung zwischen den Verbindungseinrichtungen der beiden Halter ausgebildet.

Die jeweiligen Halter- oder Bauteilkörper der Halter können hierbei nebeneinanderliegend und miteinander verbunden in einer Anordnungsebene angeordnet werden, welches sich quer zur Durchgangsrichtung erstreckt. Die Verbindbarkeit der Halterkörper mittels der jeweiligen Verbindungseinrichtung ermöglicht es, ausgehend vom Halter ein modulares Haltersystem aufzubauen, welches sich in eine, zwei oder drei Richtungen der Anordnungsebene erstreckt, die zum Beispiel jeweils einen Winkel von 90 Grad einnehmen.

Die Verbindungseinrichtung kann im Bereich der jeweiligen Außenseite des Halterkörpers zum Beispiel in gegenüberliegenden End- oder Randabschnitten der Außenseite gebildet sein.

Die Verbindungseinrichtung kann im Bereich der ersten gegenüberliegenden Seiten sowie im Bereich der mindestens einen der zweiten gegenüberliegenden Seiten jeweils mit einem oder mehreren Halteclips gebildet sein. Dieses ermöglicht es, dass die Halterkörper der Halter mittels einer Clipverbindung lösbar sowie kraft- und / oder formschlüssig zu verbinden.

Die Verbindungseinrichtung kann auf den zweiten gegenüberliegenden Seiten jeweils ausgebildet sein, derart, dass der Halterkörper auf den zweiten Außenseiten jeweils einseitig mit dem weiteren Halter unter Ausbildung der lösbaren sowie kraft- und / oder form-schlüssigen Verbindung zwischen der Verbindungseinrichtung und der zugeordneten Verbindungseinrichtung verbindbar ist. Bei dieser Ausgestaltung ist die Verbindungseinrichtung sowohl auf den ersten gegenüberliegenden Seiten wie auch auf den zweiten gegenüberliegenden Seiten am Halterkörper jeweils ausgebildet, so dass auf den Seiten jeweils eine Verbindung zwischen dem Halterkörper des Halters und dem weiteren Halterkörper des weiteren Halters ausbildbar ist. Hierdurch eine Anordnung von Haltern ermöglicht, die sich ausgehend vom Halter in vier Richtungen der Anordnungsebene erstreckt. Auf allen vier Seiten des Halterkörpers kann wahlweise jeweils ein weiterer Halter lösbar sowie kraft- und / oder formschlüssig montiert werden. Die Verbindungseinrichtung und die zugeordnete Verbindungseinrichtung können an den Haltekörpern im Wesentlichen identisch ausgebildet sein.

Der Halterkörper kann auf einer der ersten und der zweiten gegenüberliegenden Seiten einen seitlichen Durchbruch aufweisen, durch welchen hindurch das Fluidleitungselement in der Aufnahmeöffnung einbringbar ist. Auf diese Weise kann das Fluidleitungselement in der Aufnahmeöffnung des Halterkörpers nicht nur entlang der Durchgangsrichtung eingesteckt werden, sondern auch durch den seitlichen Durchbruch hindurch entlang einer Einführrichtung in der Aufnahmeöffnung eingebracht werden, die quer zur Durchgangsrichtung verläuft. Ist der weitere Halterkörper des weiteren Halters mit Hilfe der lösbaren sowie kraft- und / oder formschlüssigen Verbindung auf der Seite des Halterkörpers angeordnet, auf der der seitliche Durchbruch ausgebildet ist, wird dieser durch den weiteren Halterkörper abgedeckt oder geschlossen.

Im Bereich außerhalb des seitlichen Durchbruchs kann der Halterkörper die Aufnahmeöffnung in einem Winkel von mehr als 180 Grad umgreifend ausgebildet sein. Ist ein Außendurchmesser des Fluidleitungselements im Wesentlichen gleich einem Innendurchmesser der Aufnahmeöffnung, ist das Fluidleitungselement bei dieser Ausgestaltung mit Kraftaufwand in die Aufnahmeöffnung einzudrücken, wobei eine Wandstärke des Halterkörpers so wählbar ist, dass Seitenwände des Halterkörpers sich hierbei flexibel (nach außen) verlagern lassen.

Die Verbindungseinrichtung kann eingerichtet sein, jeweils eine kraft- und formschlüssige Verbindung zwischen der Verbindungseinrichtung und der zugeordneten Verbindungseinrichtung auszubilden. Mittels kraft- und formschlüssiger Verbindung ist die Verbindung der Halterkörper mit höherer mechanischer Stabilität ausbildbar, was insbesondere eine sichere Aufnahme des Fluidleitungselements oder der Fluidleitungselemente unterstützen kann, wenn der Halter oder die Halter im Betrieb Schwingungen oder Erschütterungen ausgesetzt ist / sind, wie es beispielsweise bei der Verwendung des Halters an einer landwirtschaftlichen Maschine im Betrieb der Fall sein kann.

Die Verbindungseinrichtung kann wenigstens ein Verbindungselement gemäß zumindest einer der folgenden Bauformen aufweisen, welches eingerichtet ist, bei Ausbildung der lösbaren sowie kraft- und / formschlüssigen Verbindung mit einem zugeordneten Verbindungselement der zugeordneten Verbindungseinrichtung einen Eingriff auszubilden: Ausnehmung auf der Außenseite; Vorsprung auf der Außenseite; Ausnehmung, die sich in Durchgangsrichtung auf der Außenseite erstreckt, insbesondere über eine Bauteilbreite des Halterkörpers in Durchgangsrichtung; Vorsprung, der sich in Durchgangsrichtung auf der Außenseite erstreckt, insbesondere über die Bauteilbreite des Halterkörpers in Durchgangsrichtung; zylindrische Ausnehmung, insbesondere mit Zylinderform über die Bauteilbreite des Halterkörpers in Durchgangsrichtung; zylindrischer Vorsprung, insbesondere mit Zylinderform über die Bauteilbreite des Halterkörpers in Durchgangsrichtung; konische Ausnehmung und konischer Vorsprung.

Die zugeordnete Verbindungseinrichtung am weiteren Halterkörper des weiteren Halters kann mindestens einer der vorangehend genannten Ausführungsformen entsprechend ausgebildet sein.

Die Verbindungseinrichtung kann jeweils mit komplementären Verbindungselementen gebildet sein. Die Verbindungseinrichtung kann hierbei auf den gegenüberliegenden Seiten jeweils mit einem ersten und einem zweiten Verbindungselement gebildet sein, die in vergleichbarer Weise an dem weiteren Halterkörper vorgesehen sind. So können an dem Halterkörper auf den Seiten jeweils eine Aufnahme oder eine Vertiefung sowie ein Vorsprung vorgesehen sein, wobei die Aufnahme oder Vertiefung der Verbindungseinrichtung am Halterkörper beim Ausbilden der lösbaren und kraft- und / oder kraftschlüssigen Verbindung einen Vorsprung der zugeordneten Verbindungeinrichtung des weiteren Halterkörpers aufnimmt und der Vorsprung der Verbindungseinrichtung an dem Halterkörper in einer zugeordneten Aufnahme oder Vertiefung der zugeordneten Verbindungseinrichtung am weiteren Halterkörper angeordnet wird. Aufnahme / Vertiefung und Vorsprung bilden komplementäre Verbindungselemente der Verbindungseinrichtung, die auf den Seiten des Halterkörpers und des weiteren Halterkörpers angeordnet sein können. Zwischen den Verbindungselementen kann eine kraft- und / oder formschlüssige Verbindung ausbildbar sein. Die komplementären Verbindungselemente können auf den Seiten des Halterkörpers des Halters und des weiteren Halterkörpers des weiten Halters jeweils in gegenüberliegenden End- oder Randabschnitten der Außenseite angeordnet sein.

Die Verbindungselemente können in Bereichen von Randabschnitten des jeweiligen Halterkörpers angeordnet sein.

Die Verbindungseinrichtung kann derart eingerichtet sein, dass der weitere Halterkörper zur Ausbildung der lösbaren sowie kraft- und / formschlüssigen Verbindung relativ zum Halterkörper entlang einer Montagerichtung führbar ist, welches im Wesentlichen parallel zur Durchgangsrichtung ist. Beispielsweise kann vorgesehen sein, dass ein Verbindungselement an dem Halterkörper und ein Verbindungselement an dem weiteren Halterkörper zum Eingriff gebracht werden können, indem der weitere Halterkörper entlang der Montagerichtung parallel zur Durchgangsrichtung verlagert wird. Zum Beispiel kann auf diese Weise ein Verbindungselement mit zylindrischem Vorsprung in einem Verbindungselement mit konischer Ausnehmung zum Eingriff gebracht werden.

Die Verbindungseinrichtung kann eine Sicherungseinrichtung aufweisen, die eingerichtet ist, den weiteren Halterkörper nach der Ausbildung der lösbaren sowie kraft- und / form-schlüssigen Verbindung an dem Halterkörper zu sichern. Mit Hilfe der Sicherungseinrichtung sind der Halterkörper und der weitere Halterkörper verbindbar, derart, dass zum Lösen der Verbindung eine Sicherungskraft zu überwinden ist, wahlweise zusätzlich zum Kraftschluss. Die Sicherungseinrichtung kann mit einem Sicherungselement an dem Halterkörper des Halters und einem zugeordneten Sicherungselement am weiteren Halterkörper des weiteren Halters ausgeführt sein, wobei die Sicherungselemente beim Ausbilden der lösbaren sowie kraft- und / oder formschlüssigen Verbindung zum Eingriff gebracht werden können. Das eine oder die mehreren Sicherungselemente können zum Beispiel an / oder benachbart zu einem Verbindungselement der jeweiligen Verbindungseinrichtung ausgebildet sein. In einer Ausgestaltung kann vorgesehen sein, Sicherungselemente mit Nut und Feder vorzusehen, wobei das Sicherungselement mit der Nut Teil der Sicherungseinrichtung an dem Halterkörper des Halters und das Sicherungselement mit der Feder Teil der zugeordneten Sicherungseinrichtung an dem weiteren Halterkörper des weiteren Halters sein kann, oder umgekehrt.

Mittels der Verbindungseinrichtung kann auf einer der ersten gegenüberliegenden Seiten oder mindestens einen der zweiten gegenüberliegenden Seiten eine lösbare sowie kraft- und / oder formschlüssige Verbindung mit einer Montageeinrichtung ausgebildet sein, die eingerichtet ist, den Halterkörper auf einer Montagefläche zu montieren. Bei dieser Ausführungsform ist die Verbindungseinrichtung eingerichtet, wahlweise eine Verbindung des Halterkörpers des Halters mit dem weiteren Halterkörper des weiteren Halters oder alternativ mit der Montageeinrichtung auszubilden, mittels welcher der Halterkörper des Halters auf einer Montagefläche montierbar ist. Die Verbindungseinrichtung ist auf den Seiten des Halterkörpers so flexibel nutzbar, um die lösbare sowie kraft- und / oder formschlüssige Verbindung mit unterschiedlichen Bauteilen auszubilden, insbesondere dem weiteren Halter oder der Montageeinrichtung.

Die Montageeinrichtung weist hierzu die zugeordnete Verbindungseinrichtung auf, vergleichbar den Erläuterungen zu dem weiteren Halterkörper des weiteren Halters. Die Montageeinrichtung kann mit einer Montageplatte gebildet sein. Die Montageeinrichtung kann Montageelemente aufweisen, zum Beispiel ein oder mehrere Schraublöcher, welche eingerichtet sind für eine Montage auf der Montagefläche.

Bei einer alternativen Ausführungsform kann vorgesehen sein, dass mittels der Verbindungseinrichtung des Halterkörpers anstelle des Halters oder der Montageeinrichtung eine Abschlussplatte lösbar sowie kraft- und / oder formschlüssig am Halterkörper anordbar ist, insbesondere auf der Seite des Halterkörpers mit dem seitlichen Durchbruch, welcher mit Hilfe der Abschlussplatte abgedeckt oder geschlossen werden kann. Im Unterschied zur Montageeinrichtung ist die Abschlussplatte frei von Montageelementen. Die Abschlussplatte weist hierzu die zugeordnete Verbindungseinrichtung auf, vergleichbar den Erläuterungen zu dem weiteren Halterkörper des weiteren Halters oder der Montageeinrichtung.

Die Montageeinrichtung und / oder Abschlussplatte sind vergleichbar dem weiteren Halterkörper des weiteren Halters jeweils auf den verschiedenen Seiten des Halterkörpers am Halter lösbar sowie kraft- und / oder formschlüssig montierbar.

In Verbindung mit dem modularen Haltersystem können die vorangehend erläuterten Ausgestaltungen entsprechend vorgesehen sein.

Das modulare Haltersystem kann mindestens einen weiteren Halter mit einem weiteren Halterkörper aufweisen, der dem ersten und dem zweiten Halter entsprechend ausgebildet sind, wobei der weitere Halterkörper auf den ersten gegenüberliegenden Seiten und der mindestens einen der zweiten gegenüberliegenden Seiten jeweils mit einem Halter aus der folgenden Gruppe lösbar sowie kraft- und / oder formschlüssig verbunden ist: erster Halter und zweiter Halter. Auf diese Weise kann das modulare Haltersystem derart ausgeführt werden, dass auf zwei, drei oder sogar vier Seiten des Halterkörpers des Halters jeweils ein weiterer Halter angeordnet ist, wobei jeweils die lösbare sowie kraft- und / oder formschlüssige Verbindung zwischen benachbarten Haltern ausgebildet ist. So ist eine mehrdimensionale Anordnung von Haltern herstellbar, die sich in einer Anordnungsebene erstreckt, wobei benachbarte Halter jeweils lösbar sowie kraft- und / oder formschlüssig miteinander verbunden sind.

Eine Öffnungsfläche eines seitlichen Durchbruchs des ersten Halterkörpers und eine Öffnungsfläche eines seitlichen Durchbruchs des zweiten Halterkörpers können zueinander um einen Winkel von 90 Grad gedreht angeordnet sein. Eine Öffnungsfläche eines seitlichen Durchbruchs des ersten Halterkörpers und eine Öffnungsfläche eines seitlichen Durchbruchs des zweiten Halterkörpers können zueinander um einen Winkel von 90 Grad gedreht angeordnet sein. Auf diese Weise ist ein jeweiliges Fluidleitungselement in dem ersten und dem zweiten Halter aus Einführrichtungen quer zur Durchgangsrichtung einführbar, die um 90 Grad versetzt sind.

Der zweite Haltekörper kann in einem Winkel von 90 Grad oder einem Vielfachen von 90 Grad mit einer beliebigen Seite des ersten Haltekörpers verbunden sein.

In einer Ausgestaltung kann vorgesehen sein, dass die seitlichen Durchbrüche des ersten und des zweiten Halterkörpers in dem modularen Haltersystem einander gegenüberliegend angeordnet sind, wodurch für die beiden Halter eine gemeinsame Aufnahmeöffnung für ein oder mehrere Fluidleitungselemente gebildet ist. Auch kann in einer Ausgestaltung vorgesehen sein, dass der zweite Halterkörper den seitlichen Durchbruch des ersten Halterkörpers bedeckt.

Es kann vorgesehen sein, dass die Aufnahmeöffnung des ersten Haltekörpers und die Aufnahmeöffnung des zweiten Haltekörpers eingerichtet sind, Fluidleitelemente mit unterschiedlichen Außendurchmessern aufzunehmen, wobei hierbei die beiden Haltekörper hinsichtlich ihrer jeweiligen äußeren Abmessungen im Wesentlichen gleich ausgeführt sein können. So können die Schlauch- oder Rohrdurchmesser in einem Haltersystem variieren. Das kann zum Beispiel den Vorteil bieten, Luftförderschläuche mit Hydraulikschläuchen durch das modulare Haltersystem zu führen.

In einer Ausgestaltung ist eine landwirtschaftliche Maschine geschaffen, welche den Halter oder das modulare Haltersystem aufweist. In dem Halterkörper des Halters ist ein Fluidleitungselement wie Rohr oder Schlauch angeordnet, insbesondere eine Hydraulikleitung oder eine Leitung zum fluidunterstützten Transport von Saatgut. Auch eine Leitung zum Transportieren oder Leiten eines Spritzmittels kann in dem Halter angeordnet sein. Mit Hilfe des vorgeschlagenen Halters und des modularen Haltersystems können das eine oder mehrere Fluidleitungselemente bei der landwirtschaftlichen Maschine sicher haltend aufgenommen werden, insbesondere auch bei Schwingungen oder Erschütterungen, wie sie im Betrieb der landwirtschaftlichen Maschine regelmäßig auftreten.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung eines Halters für ein Fluidleitungselement wie Schlauch oder Rohr;
- Fig. 2: eine schematische Darstellung des Halters aus Fig. 1 von vorn;
- Fig. 3: eine schematische perspektivische Darstellung einer Anordnung mit dem Halter aus Fig. 1 und einer hieran angeordneten Montageplatte;
- Fig. 4: eine schematische perspektivische Darstellung der Montageplatte aus Fig. 3;
- Fig. 5: eine schematische perspektivische Darstellung einer Anordnung mit dem Halter aus Fig. 1 und hieran angeordneten Montageplatten;
- Fig. 6: eine schematische perspektivische Darstellung einer Anordnung mit dem Halter aus Fig. 1 und einer hieran angeordneten Montageplatte, wobei ein seitlicher Durchbruch des Halters offen ist;
- Fig. 7: eine schematische perspektivische Darstellung einer Anordnung mit dem Halter aus Fig. 1 und einem in einer Aufnahmeöffnung angeordneten Fluidleitungselements und
- Fig. 8: eine schematische perspektivische Darstellung eines modularen Haltersystems mit mehreren in einer Anordnungsebene angeordneten Haltern.

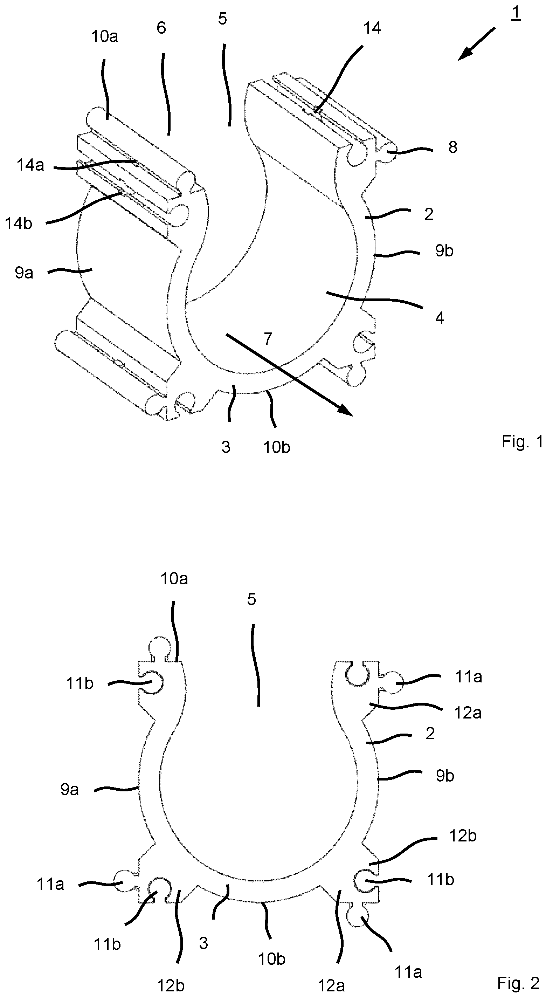

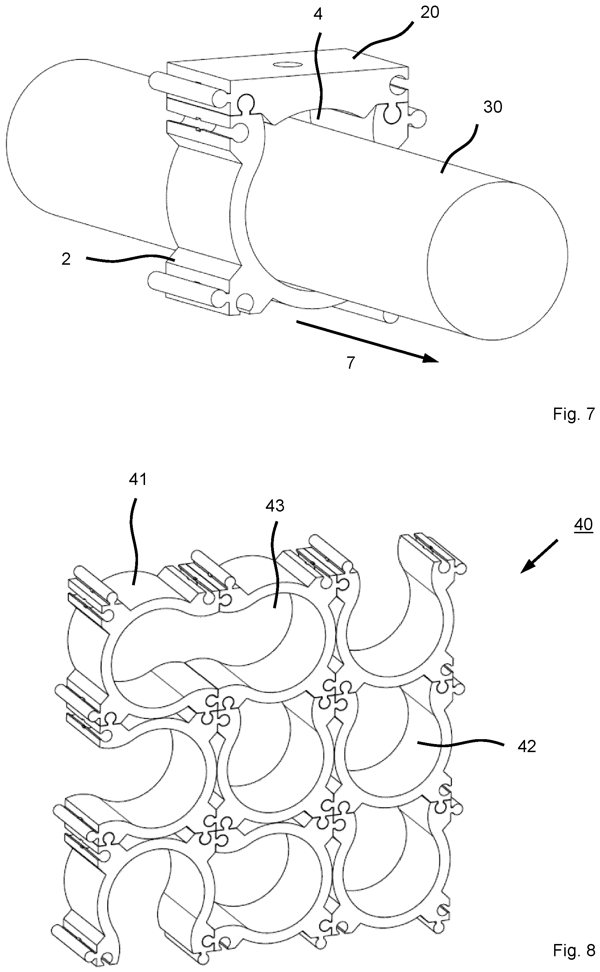

Fig. 1 und 2 zeigen schematische Darstellungen eines Halters 1 für ein Fluidleitungselement (nicht dargestellt). Der Halter 1 weist einen Halterkörper 2 mit einer Seitenwand 3 auf. Die Seitenwand 3 umgreift eine Aufnahmeöffnung 4 in einem Winkel von größer 180 Grad und weist einen seitlichen Durchbruch 5 mit einer Öffnungsfläche 6 auf. In der Aufnahmeöffnung 4 ist ein Fluidleitungselement (vgl. Fig. 7 unten) einbringbar, entweder entlang einer Durchgangsrichtung 7 oder durch den seitlichen Durchbruch 5 hindurch quer zur Durchgangsrichtung 7.

An dem Halterkörper 2 ist außen eine Verbindungseinrichtung 8 auf ersten gegenüberliegenden Seiten 9a, 9b sowie zweiten gegenüberliegenden Seiten 10a, 10b ausgebildet. Die Verbindungseinrichtung 8 umfasst auf den gegenüberliegenden Seiten 9a, 9b, 10a, 10b jeweils ein erstes Verbindungselement 11a, welches im gezeigten Beispiel als Vorsprung mit zylindrischer und wahlweise konischer Form ausgebildet ist, sowie ein zweites Verbindungselement 11b, welches als Vertiefung komplementär zum Vorsprung mit zylindrischer und konischer Form ausgeführt ist. Das erste und das zweite Verbindungselement 11a, 11b sind in einem jeweiligen Endabschnitt 12a, 12b der zugeordneten Seite des Halterkörpers 2 angeordnet.

Die Verbindungseinrichtung 8 ist somit auf den gegenüberliegenden Seiten 9a, 9b, 10a, 10b jeweils in gleicher Art und Weise ausgeführt, was es ermöglicht, mehrere Halter vergleichbar dem Halter 1 paarweise miteinander zu verbinden, derart, dass zwischen den verbundenen Haltern jeweils eine lösbare sowie kraft- und formschlüssige Verbindung hergestellt wird, wie dies beispielhaft in Fig. 8 gezeigt ist. Beim Verbinden von zwei Halterkörpern können diese entlang einer Montagerichtung relativ zueinander bewegt werden, die im Wesentlichen parallel zur Durchgangsrichtung 7 ist. Hierbei wird dann das im gezeigten Beispiel als Vorsprung ausgeführte erste Verbindungselement 11a in das beispielhaft als Vertiefung ausgeführte zweite Verbindungselement 11b eingesteckt.

Die Verbindungselemente 11a, 11b können unter Verwendung eines Kunststoffes oder eines Kunststoffmaterials flexibel ausgestaltet sein, so dass alternativ ein weiterer Halterkörper auch auf einer Seite des Halterkörpers 2 heranführbar ist, um die einander zugeordneten Verbindungselemente 11a, 11b ineinander zu drücken oder zu clipsen.

Bei dem Halter 1 gemäß Fig. 1 ist weiterhin eine Sicherheitseinrichtung 14 mit Sicherungselementen 14a, 14b gebildet, die eingerichtet ist, miteinander verbundene Halterkörper in der lösbaren sowie kraft- und formschlüssigen Verbindung, welche mit Hilfe der Verbindungseinrichtung 8 ausgeführt ist, zu sichern. Das erste und das zweite Sicherungselemente 14a, 14b sind im gezeigten Beispiel mit Nut und Feder ausgeführt. Bei der gezeigten Ausführungsform sind das erste und zweite Sicherungselement 14a, 14b an den Verbindungselementen 11a, 11b bzw. benachbart hierzu hergestellt.

Der Halter 1 kann beispielsweise als Spritzgussbauteil ausgeführt sein.

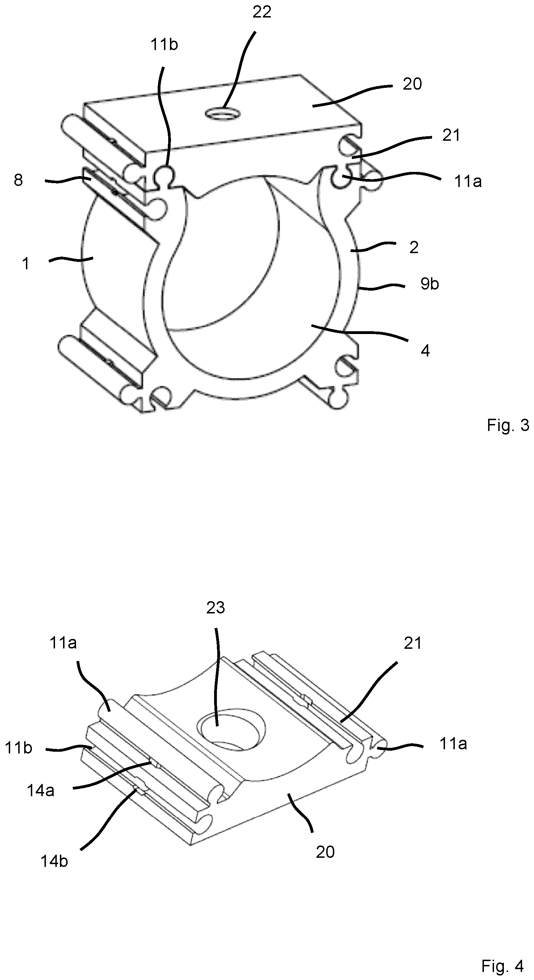

Fig. 3 zeigt eine schematische perspektivische Darstellung einer Anordnung, bei der der seitliche Durchbruch 5 des Halterkörpers 2 mit einer Montageplatte 20 verschlossen ist. Fig. 4 zeigt eine schematische perspektivische Darstellung der Montageplatte 20. Die Montageplatte 20 weist eine zugeordnete Verbindungseinrichtung 21 mit dem ersten und dem zweiten Verbindungselement 11a, 11b auf und ist insoweit hinsichtlich der Verbindungseinrichtung vergleichbar einem weiteren Halterkörper (vgl. Fig. 8 unten) an dem Halter 1 lösbar sowie kraft- und formschlüssig montierbar. Die Montageplatte 20 verfügt über ein Montageelement 22, welches eingerichtet ist, die Montageplatte 20 zusammen mit dem Halter 1 auf einer Montagefläche (nicht dargestellt) zu montieren. Hierzu ist das Montageelement 22 bei der dargestellten Ausführungsform mit einem Schraubloch 23 gebildet.

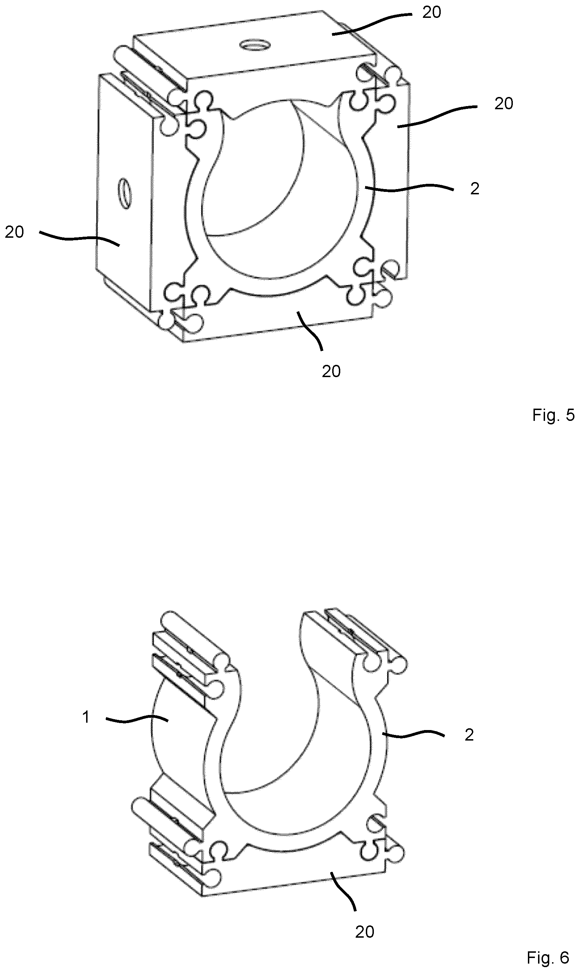

Fig. 5 und 6 zeigen perspektivische Darstellungen einer jeweiligen Anordnung mit dem Halter 1, wobei eine jeweilige Montageplatte 20 auf allen vier Seiten (vgl. Fig. 5) oder auf nur einer Seite (vgl. Fig. 6) des Halters 1 angeordnet sein kann, insbesondere derart, dass beim gezeigten Beispiel in Fig. 6 im Unterschied zur Ausführung in Fig. 3 der seitliche Durchbruch 5 geöffnet bleibt.

Fig. 7 zeigt eine schematische perspektivische Darstellung einer Anordnung, bei der ein Fluidleitungselement 30 wie Rohr oder Schlauch in der Aufnahmeöffnung 4 des Halterkörpers 2 des Halters 1 angeordnet ist. Das Fluidleitungselement 30 verläuft hierbei in der Durchgangsrichtung 7.

Fig. 8 zeigt eine schematische perspektivische Darstellung eines modulares Haltersystems 40, bei den mehrere Haltern 41, die dem Halter 1 entsprechend ausgeführt sind, in einer zweidimensionalen Anordnungsebene angeordnet sind und so mehrere Aufnahmeöffnungen 42 zur jeweiligen Aufnahme eines oder mehrerer Fluidleitungselemente bereitstellen. Benachbarte der mehreren Halter 41 sind jeweils mit Hilfe der Verbindungseinrichtung 8 untereinander lösbar sowie kraft- und formschlüssig verbunden. Die seitlichen Durchbrüche 5 benachbarter der mehreren Halter 41 können einander zugewandt sein, so dass eine gemeinsame Aufnahmeöffnung 43 gebildet ist. Bei anderen benachbarten der mehreren Halter 41 sind die seitlichen Durchbrüche 5 auf voneinander abgewandten Seiten gebildet. Auch kann der seitliche Durchbruch 5 bei einem Teil der mehreren Halter 41 mittels eines benachbarten Halters verschlossen sein.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Halter (1) für ein modulares Haltersystem, mit einem Halterkörper (2), welcher Folgendes aufweist:
- eine Aufnahmeöffnung (4) mit einer Durchgangsrichtung (7) zum Aufnehmen eines Fluidleitungselements (30) wie Rohr oder Schlauch;
- erste Außenseiten auf entlang einer ersten Richtung quer zur Durchgangsrichtung (7) ersten gegenüberliegenden Seiten des Halterkörpers (2);
- zweite Außenseiten auf entlang einer zweiten Richtung quer zur Durchgangsrichtung und quer zur ersten Richtung zweiten gegenüberliegenden Seiten des Halterkörpers (2); und
- eine Verbindungseinrichtung (8), die eingerichtet ist, den Halterkörper (2) mit einem weiteren Halter (41) zu verbinden, welcher in einem weiteren Halterkörper eine weitere Aufnahmeöffnung (42) mit der Durchgangsrichtung (7) zum Aufnehmen eines weiteren Fluidleitungselements aufweist, und hierbei mit einer zugeordneten Verbindungseirichtung an dem weiteren Halterkörper (2) zusammenzuwirken;
wobei die Verbindungseinrichtung (8) auf den ersten gegenüberliegenden Seiten und mindestens einer der zweiten gegenüberliegenden Seiten jeweils ausgebildet ist, derart, dass der Halterkörper (2) auf den ersten Außenseiten und mindestens einer der zweiten Außenseiten jeweils einseitig mit dem weiteren Halter (41) unter Ausbildung einer lösbaren sowie kraft- und / oder formschlüssigen Verbindung zwischen der Verbindungseinrichtung (8) und der zugeordneten Verbindungseinrichtung verbindbar ist.

2. Halter (1) nach Anspruch 1, **dadurch gekennzeichnet, dass** die Verbindungseinrichtung (8) auf den zweiten gegenüberliegenden Seiten jeweils ausgebildet ist, derart, dass der Halterkörper (2) auf den zweiten Außenseiten jeweils einseitig mit dem weiteren Halter (41) unter Ausbildung der lösbaren sowie kraft- und / oder formschlüssigen Verbindung zwischen der Verbindungseinrichtung (8) und der zugeordneten Verbindungseinrichtung verbindbar ist.

3. Halter (1) nach Anspruch 1 oder 2, **dadurch gekennzeichnet, dass** der Halterkörper (2) auf einer der ersten und der zweiten gegenüberliegenden Seiten einen seitlichen Durchbruch (5) aufweist, durch welchen hindurch das Fluidleitungselement (30) in der Aufnahmeöffnung (4) einbringbar ist.

4. Halter (1) nach mindestens einem der vorangehenden Ansprüche, **dadurch gekennzeichnet, dass** die Verbindungseinrichtung (8) eingerichtet ist, jeweils eine kraft- und formschlüssige Verbindung zwischen der Verbindungseinrichtung (8) und der zugeordneten Verbindungseinrichtung auszubilden.

5. Halter (1) nach mindestens einem der vorangehenden Ansprüche, **dadurch gekennzeichnet, dass** die Verbindungseinrichtung (8) wenigstens ein Verbindungselement (11a; 11b) gemäß zumindest einer der folgenden Bauformen aufweist, welches eingerichtet ist, bei Ausbildung der lösbaren sowie kraft- und / formschlüssigen Verbindung mit einem zugeordneten Verbindungselement der zugeordneten Verbindungseinrichtung einen Eingriff auszubilden:
- Ausnehmung auf der Außenseite;
- Vorsprung auf der Außenseite;
- Ausnehmung, die sich in Durchgangsrichtung auf der Außenseite erstreckt, insbesondere über eine Bauteilbreite des Halterkörpers (2) in Durchgangsrichtung (7);
- Vorsprung, der sich in Durchgangsrichtung (7) auf der Außenseite erstreckt, insbesondere über die Bauteilbreite des Halterkörpers (2) in Durchgangsrichtung (7);
- zylindrische Ausnehmung, insbesondere mit Zylinderform über die Bauteilbreite des Halterkörpers (2) in Durchgangsrichtung (7);
- zylindrischer Vorsprung, insbesondere mit Zylinderform über die Bauteilbreite des Halterkörpers (2) in Durchgangsrichtung (7);
- konische Ausnehmung und
- konischer Vorsprung.

6. Halter (1) nach Anspruch 1, **dadurch gekennzeichnet, dass** die Verbindungseinrichtung (8) jeweils mit komplementären Verbindungselementen (11a, 11b) gebildet ist.

7. Halter (1) nach mindestens einem der vorangehenden Ansprüche, **dadurch gekennzeichnet, dass** die Verbindungseinrichtung (8) derart eingerichtet ist, dass der weitere Halterkörper zur Ausbildung der lösbaren sowie kraft- und / formschlüssigen Verbindung relativ zum Halterkörper (2) entlang einer Montagerichtung führbar ist, welches im Wesentlichen parallel zur Durchgangsrichtung (7) ist.

8. Halter (1) nach mindestens einem der vorangehenden Ansprüche, **dadurch gekennzeichnet, dass** die Verbindungseinrichtung (8) eine Sicherungseinrichtung (14) aufweist, die eingerichtet ist, den weiteren Halterkörper nach der Ausbildung der lösbaren sowie kraft- und / formschlüssigen Verbindung an dem Halterkörper (2) zu sichern.

9. Halter (1) nach mindestens einem der vorangehenden Ansprüche, **dadurch gekennzeichnet, dass** mittels der Verbindungseinrichtung (8) auf einer der ersten gegenüberliegenden Seiten oder mindestens einen der zweiten gegenüberliegenden Seiten eine lösbare sowie kraft- und / oder formschlüssige Verbindung mit einer Montageeinrichtung (20) ausgebildet ist, die eingerichtet ist, den Halterkörper (2) auf einer Montagefläche zu montieren.

10. Modulares Haltersystem (40) für Fluidleitungselemente wie Rohre oder Schläuche, mit mehreren Haltern nach jeweils mindestens einem der vorangehenden Ansprüche, wobei ein erster Halterkörper eines ersten Halters und ein zweiter Halterkörper eines zweiten Halters jeweils Folgendes aufweisen:
- eine Aufnahmeöffnung (42) mit einer Durchgangsrichtung (7) zum Aufnehmen eines Fluidleitungselements (30) aufweist;
- erste Außenseiten auf entlang einer ersten Richtung quer zur Durchgangsrichtung (7) ersten gegenüberliegenden Seiten des Halterkörpers (2);
- zweite Außenseiten auf entlang einer zweiten Richtung quer zur Durchgangsrichtung (7) und quer zur ersten Richtung zweiten gegenüberliegenden Seiten des Halterkörpers; und
- eine Verbindungseinrichtung (8), mit der eine lösbare sowie kraft- und / oder formschlüssige Verbindung ausbildbar ist;
wobei bei dem ersten und dem zweiten Halterkörper die Verbindungseinrichtung (8) jeweils auf den ersten gegenüberliegenden Seiten und mindestens einer der zweiten gegenüberliegenden Seiten ausgebildet ist und
wobei zwischen der Verbindungseinrichtung (8) des ersten Halters und der zugeordneten Verbindungseinrichtung des zweiten Halters die lösbare sowie kraft- und / oder formschlüssige Verbindung gebildet ist.

11. Modulares Haltersystem nach Anspruch 10, **gekennzeichnet durch** mindestens einen weiteren Halter mit einem weiteren Halterkörper, der dem ersten und dem zweiten Halter entsprechend ausgebildet sind, wobei der weitere Halterkörper auf den ersten gegenüberliegenden Seiten und der mindestens einen der zweiten gegenüberliegenden Seiten jeweils mit einem Halter aus der folgenden Gruppe lösbar sowie kraft- und / oder formschlüssig verbunden ist: erster Halter und zweiter Halter.

12. Modulares Haltersystem nach Anspruch 10 oder 11, **dadurch gekennzeichnet, dass** eine Öffnungsfläche (6) eines seitlichen Durchbruchs (5) des ersten Halterkörpers und eine Öffnungsfläche eines seitlichen Durchbruchs des zweiten Halterkörpers zueinander um einen Winkel von 90 Grad gedreht angeordnet sind.

13. Modulares Haltersystem nach mindestens einem der Ansprüche 10 bis 12, **dadurch gekennzeichnet, dass** die Aufnahmeöffnung des ersten Halterkörpers und die Aufnahmeöffnung des zweiten Halterkörpers eingerichtet sind, Fluidleitelemente mit unterschiedlichen Außendurchmessern aufzunehmen.
